(19) Europäisches Patentamt / European Patent Office / Office européen des brevets

(11) **EP 2 532 548 A2**

(12) **EUROPEAN PATENT APPLICATION**

(43) Date of publication:
**12.12.2012 Bulletin 2012/50**

(51) Int Cl.:
*B60K 6/10* (2006.01)  *B60K 6/365* (2007.10)
*B60K 6/48* (2007.10)  *B60K 6/547* (2007.10)
*B60K 6/30* (2007.10)  *B60W 10/06* (2006.01)
*B60W 10/08* (2006.01)  *B60W 20/00* (2006.01)
*B60W 10/24* (2006.01)  *B60K 6/448* (2007.10)

(21) Application number: **12168810.5**

(22) Date of filing: **22.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.06.2011 JP 2011127702**

(71) Applicant: **DENSO CORPORATION**
**Kariya City**
**Aichi 448-8661 (JP)**

(72) Inventors:
• **Tanaka, Eitaro**
**Kariya-city,, Aichi 448-8661 (JP)**
• **Narita, Takahiro**
**Kariya-city,, Aichi 448-8661 (JP)**
• **Nagata, Tetsuya**
**Kariya-city,, Aichi 448-8661 (JP)**

(74) Representative: **TBK**
**Bavariaring 4-6**
**80336 München (DE)**

(54) **Vehicle control apparatus**

(57)  A vehicle control apparatus (44) is provided to properly control power transfer in a vehicle. In a case of a regenerative mode, regenerative control processing is executed to store the kinetic energy of the vehicle in a flywheel (32) as rotation energy. In case of a non-regenerative mode, when a rotation speed (Nfw) of the flywheel (32) is lower than a regulation speed (Na), a second alternator (40) is prohibited from generating power using the rotation energy stored in the flywheel (32).

## FIG. 1

EP 2 532 548 A2

**Description**

FIELD OF THE INVENTION

The present invention relates to a vehicle control apparatus, which controls power transfer in a vehicle by using a flywheel and a generator.

BACKGROUND

A conventional vehicle power train, for example as disclosed in WO 2009/010819, has a planetary gear mechanism, which transfers power (dynamic force) among a rotation shaft connecting drive wheels and an internal combustion engine, a flywheel storing rotation and a vehicle generator. Specifically, the planetary gear mechanism of the power train has a first rotor body, a second rotor body and a third rotor body, which are connected to the flywheel, the rotation shaft and the vehicle generator, respectively. According to this power train, it is possible to perform a regenerative control for storing kinetic energy of a vehicle in the flywheel by way of a power transfer path from the drive wheels to the flywheel through the planetary gear mechanism.
The kinetic energy stored in the flywheel through the planetary gear mechanism is affected by rotation speeds of the first, the second and the third rotor bodies in the regenerative control time. Specifically, when the rotation speed of the first rotor body mechanically coupled to the flywheel is low, the kinetic energy of the vehicle is not stored in the flywheel sufficiently.
It is thus required to increase the energy stored in the flywheel out of the kinetic energy of the vehicle for most effectively using the kinetic energy of the vehicle.

SUMMARY

The present invention has an object to provide a vehicle control apparatus, which increases energy stored in a flywheel out of kinetic energy of a vehicle.
According to the present invention, a vehicle control apparatus is provided for a vehicle having an internal combustion engine and a power transfer mechanism for transferring power among a flywheel storing rotation energy, drive wheels and a torque regulator device for regulating torque applied thereto. The power transfer mechanism includes a first rotor body, a second rotor body and a third rotor body coupled mechanically to the flywheel, the drive wheels and the torque regulator device, respectively, and causes rotation speeds of the first rotor body, the second rotor body and the third rotor body to be on a linear line in a collinearity characteristic diagram. The vehicle control apparatus is configured to execute regenerative processing and limiting processing, which operate as regenerative processing means and limiting means, respectively. That is, the vehicle control apparatus is programmed to The regenerative processing is for storing kinetic energy of the vehicle in the flywheel as rotation energy under a condition that the internal combustion engine is not instructed to generate power. The limiting processing is for limiting supply of the rotation energy stored in the flywheel to an in-vehicle device in case that a rotation speed (Nfw) of the flywheel is determined to be equal to or lower than a regulation speed (Na) in a condition other than a condition of regenerative processing by the regenerative processing means.

BRIEF DESCRIPTION OF THE DRAWINGS

The above and other objects, features and advantages of the present invention will become more apparent from the following detailed description made with reference to the accompanying drawings. In the drawings:

FIG. 1 is a schematic diagram showing a vehicle drive system including a vehicle control apparatus according to a first embodiment of the present invention;
FIG. 2 is a collinearity characteristic diagram showing a power transfer characteristic of a power transfer mechanism in the first embodiment;
FIG. 3 is a flowchart showing flywheel rotation speed maintaining processing executed in the first embodiment;
FIGS. 4A to 4C are schematic diagrams showing power transfer paths in a vehicle in the first embodiment;
FIG. 5 is a graph showing a result of measurements of an indicated engine output and a thermal efficiency in the first embodiment;
FIG. 6 is a system diagram showing a vehicle control apparatus according to a second embodiment of the present invention;
FIG. 7 is a flowchart showing flywheel rotation speed maintaining processing executed in the second embodiment;
FIGS. 8A and 8B are schematic diagrams showing power transfer paths in a vehicle in the second embodiment; and
FIG. 9 is a sectional view showing a part of the power transfer mechanism in the other embodiment.

DETAILED DESCRIPTION OF THE EMBODIMENT

(First Embodiment)

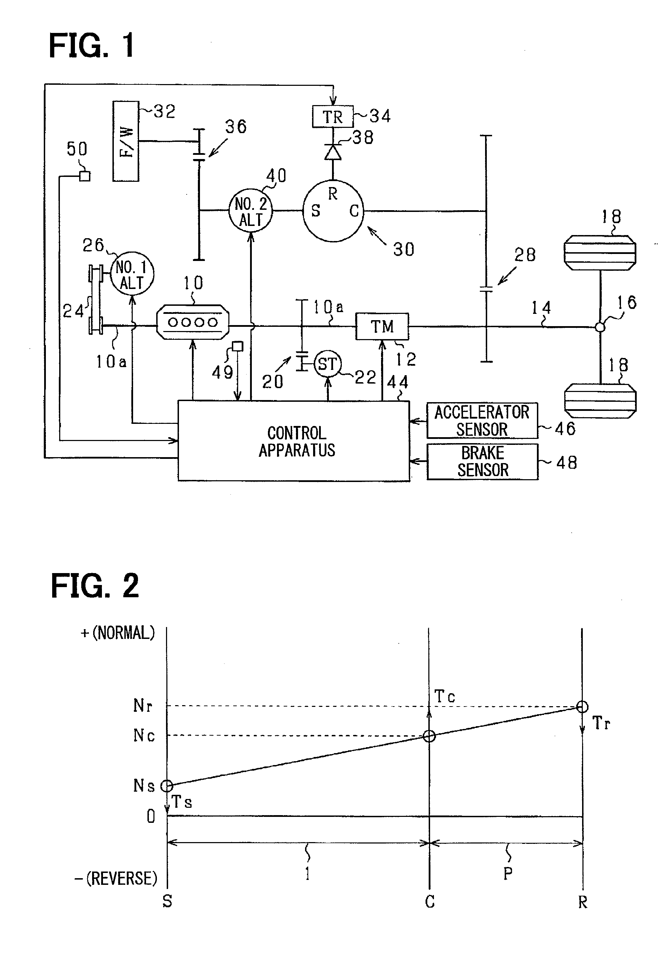

As shown in FIG. 1, an internal combustion engine 10 is provided as a main in-vehicle machine in a vehicle. A crankshaft (output shaft) 10a of the engine 10 is mechanically coupled to drive wheels 18 through a transmission device (TR) 12, a drive shaft 14 and a differential gear 16. A starter 22 is provided to the crankshaft 10a to rotate the crankshaft 10a initially through a speed reduction gear 20. The sped reduction gear 20 is a speed change device for reducing the rotation speed of the crankshaft 10a side to be less than that of the starter 22 side.

A first alternator (ALT) 26, which is an electric power generator, is coupled mechanically to the crankshaft 10a through a belt 24. The first alternator 26 is formed of a regulator, a rotor coil and the like although not shown, and has a function of generating electric power when rotated. Specifically, the first alternator 26 has a function of a power source for vehicle accessory devices such as the starter 22 and a function of charging an in-vehicle battery (for example, lead battery) not shown. The electric power generated by the first alternator 26 is regulated by regulating an excitation current flowing to the rotor coil by the regulator. Specifically, this generated power tends to increase as a load torque to the first alternator 26 increases or the rotation speed of the alternator increases by the regulation of the excitation current.

A power transfer mechanism 30 is coupled mechanically to the drive shaft 14 through a speed reduction gear 28. The power transfer mechanism 30 includes plural power transfer rotor bodies, which rotate cooperatively and enable transfer of power among the drive wheels 18 (drive shaft 4), a flywheel (F/W) 32 and a torque regulator device (TR) 34. Specifically, the power transfer mechanism 30 is formed of a planetary gear mechanism having a sun gear S, a carrier (carriers) C and a ring gear R. The sun gear S is a first rotor body coupled mechanically to the flywheel 32 through a speed increase gear 36. The carrier C is a second rotor body coupled mechanically to the drive shaft 14. The ring gear R is a third rotor body coupled mechanically to the torque regulator device 34 through a one-way clutch 38. The speed increase gear 36 is a speed change device for increasing the rotation speed of the flywheel 32 side to be higher than that of the power transfer mechanism 30 side (sun gear S side). The one-way clutch 38 is a one-way transfer mechanism, which transfers the power when the relative rotation speed of the ring gear R side relative to the torque regulator device 34 side is not negative.

The flywheel 32 is an energy storing device for storing the inputted rotation energy as rotation energy.

The torque regulator device 34 is torque regulating means for applying a torque to the ring gear R in a direction to hinder the rotation of the ring gear R of the power transfer mechanism 30. Specifically, the torque regulator device 34 is capable of variably setting the torque to be applied to the ring gear R continuously or stepwisely. The torque regulator device 34 is assumed to be formed of a wet clutch mechanism and a brake mechanism. The wet clutch mechanism has a pair of clutch plates.

A second alternator (generator) 40 is connected between the speed increase gear 36 and the sun gear S of the power transfer mechanism 30. The second alternator 40 has, similarly to the first alternator 26, a function of a power source for the in-vehicle accessory devices and a function of charging the in-vehicle battery. Similarly to the first alternator 26, the electric power generated by the second alternator 40 tends to increase as a load torque to the second alternator 40 increases or the rotation speed of the second alternator 40 increases by the regulation of the excitation current.

The flywheel 32, the power transfer mechanism 30, the torque regulator device 34, the second alternator 40 and the like are accommodated within a housing and integrated therein as a single unit.

The wet clutch mechanism is used as the torque regulator device 34 so that the structure inside the housing is not complicated. That is, the planetary gear mechanism of the power transfer mechanism 30 provided inside the housing is supplied with lubricating oil for maintaining operation reliability. In case that a dry clutch mechanism is used as the clutch mechanism, for example, it is required to prevent the lubricating oil from flowing from the planetary gear mechanism side to the dry clutch mechanism side in the housing. The structure inside the housing thus becomes complicated.

The one-way clutch 38 is provided to minimize as much as possible the rate of decrease of the rotation energy of the flywheel 32 due to rotation of the ring gear R under a condition such as a vehicle stop time, in which the rotation speed of the carrier becomes excessively low. If the rotation energy is being stored in the flywheel 32 under the condition that the rotation speed of the carrier C is excessively low, the power is transferred from the sun gear S side to the ring gear R side through the power transfer mechanism 30, the ring gear R may inadvertently rotate in reverse. In this case, the lubricating oil may be stirred by the wet clutch mechanism of the torque regulator device 34 and hence the rotation energy of the flywheel 32 may decrease greatly. According to the one-way clutch 38, the power between the ring gear R and the torque regulator device 34 can be shut off when the ring gear R is rotated in reverse. Thus the rate of decrease of rotation energy of the flywheel 32 can be minimized as much as possible.

A control apparatus 44 is provided to electronically control a vehicle as a control object and is formed of a microcomputer including a CPU, a ROM, a RAM and the like. The control apparatus 44 receives output signals of an accelerator sensor 46 for detecting a user's accelerator operation amount, a brake sensor 48 for detecting a user's brake operation amount, a crankshaft angle sensor 49 for detecting a rotation speed of the crankshaft 10a, a rotation speed sensor 50 for detecting a rotation speed of the flywheel 32, and the like. The control apparatus 44 executes various control processing stored in the ROM by using the inputted output signals. That is, it executes start control processing for starting the engine 10 by the starter 22, combustion control processing for controlling fuel combustion in the engine 10 and power generation control processing for generating electric power by the first alternator 26 and the second alternator 40.

The combustion control processing for the engine 10 includes processing of calculating a power required to the engine 10 in accordance with the output value of the accelerator sensor 46 and the like, processing of supplying fuel to the engine 10 in accordance with the required power, and the like. The amount of fuel to be supplied to the engine 10 increases as the required power of the engine 10 increases.

The control apparatus 44 executes regenerative control processing in particular. This regenerative control processing is for storing the kinetic energy of the vehicle in the flywheel 32 through the power transfer mechanism 30 when the user performs a braking operation (vehicle braking command), more specifically when the vehicle is being decelerated and a fuel cut-off control is performed to stop fuel supply to the engine 10. According to the regenerative control processing, the number of times of operating the first alternator 26 or the second alternator 40 for charging the in-vehicle battery later can be reduced, and hence the fuel economy of the engine 10 can be improved.

Whether the braking operation is being performed may be determined based on the output value of the brake sensor 48. The regenerative control processing is assumed to be executed not only when the vehicle is decelerated by the braking operation but also, for example, the vehicle is descending a downslope while maintaining a predetermined travel speed by the braking operation.

The control apparatus 44 further executes flywheel rotation speed maintaining processing for maintaining the flywheel rotation speed detected by the rotation speed sensor 50 to be higher than a regulation speed as much as possible. This flywheel rotation maintaining processing is for increasing an apportionment of the kinetic energy of the vehicle to the flywheel 32 side between the flywheel 32 and the torque regulator device 34, when the regenerative control processing is executed.

This flywheel rotation speed maintaining processing will be described next with reference to FIG. 2, which shows a collinearity characteristic among the rotation speeds Ns, Nc and Nr of the sun gear S, the carrier C and the ring gear R of the power transfer mechanism 30, respectively. In this figure, arrows indicate directions of transfer of torque. The direction of torque is positive when the arrow is directed upward as the rotation speed is. Thus, the power is defined to be positive when the power is inputted to the power transfer mechanism 30.

Torques Ts, Tc and Tr applied to the sun gear S, the carrier C and the ring gear R, respectively, are in a proportional relation thereamong under a condition that the power is transferred through the power transfer mechanism 30. Specifically, the relation among the torque Ts of the sun gear S, the torque Tc of the carrier C and the torque Tr of the ring gear R is expressed by the following equations (c1) and (c2) by using a ratio ρ

($=Zs/Zr$) of the number of teeth $Zs$ of the sun gear S relative to the number of teeth $Zr$ of the ring gear R.

$$Tr = -Tc/(1+\rho) \quad \text{... (c1)}$$

$$Ts = -\rho \times Tc/(1+\rho) \quad \text{... (c2)}$$

According to this relation, the input torque to the carrier C is determined in accordance with a travel condition of a vehicle while the regenerative control processing is being executed. The output torques of the sun gear S and the ring gear R are thus determined. The rotation speed Nc of the carrier C, the rotation speed Ns of the sun gear S and the rotation speed Nr of the ring gear R are required to satisfy the following equation (c3).

$$Nr = (1+\rho) \times Nc - \rho \times Ns \quad \text{... (c3)}$$

The kinetic energy of the vehicle supplied from the drive wheels 18 to the flywheel 32 through the power transfer mechanism 30 is proportional to a product of the rotation speed of the flywheel 32 and the input torque to the flywheel 32 (torque determined by dividing the output torque of the sun gear S by the speed increase ratio of the speed increase gear 36). Based on this proportional relation and the applied torques to the sun gear S, the carrier C and the ring gear R corresponding to the vehicle travel condition, the kinetic energy of the vehicle supplied to the flywheel 32 side between the torque regulator device 34 and the flywheel 32 increases as the flywheel rotation speed increases. By thus maintaining the flywheel rotation speed to be higher than the regulation speed as much as possible, the kinetic energy of the vehicle, which is restorable to the flywheel 32 by the regenerative control processing, is increased.

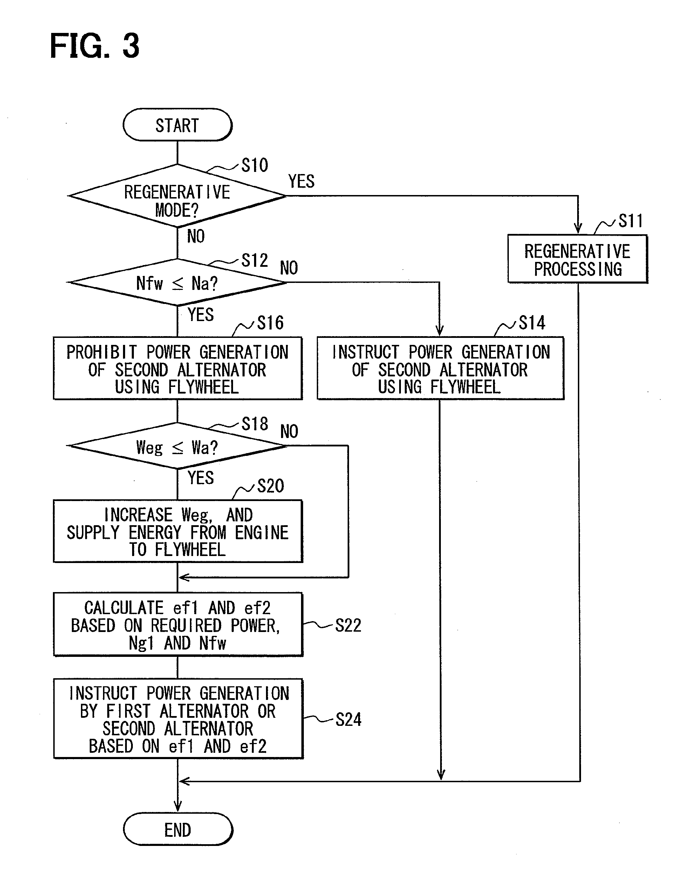

The vehicle control processing including flywheel rotation speed maintaining processing is shown in FIG. 3. This processing is repeated, for example, at a predetermined interval.

In this processing, it is first checked at step S10 whether the vehicle is in a regenerative mode for executing the regenerative control processing. The regenerative mode may be determined for example when the fuel cut-off control is being executed because of deceleration of the vehicle. If the check result at step S10 is YES, regenerative processing is executed at S11, which operates as regenerative processing means.

If it is determined at step S10 that the vehicle is not in the regenerative mode, step S12 is executed to check whether the flywheel rotation speed Nfw is equal to or lower than the regulation speed Na. The regulation speed Na may be determined empirically to improve fuel economy of the engine 10 in a predetermined travel mode (for example, JC08 mode).

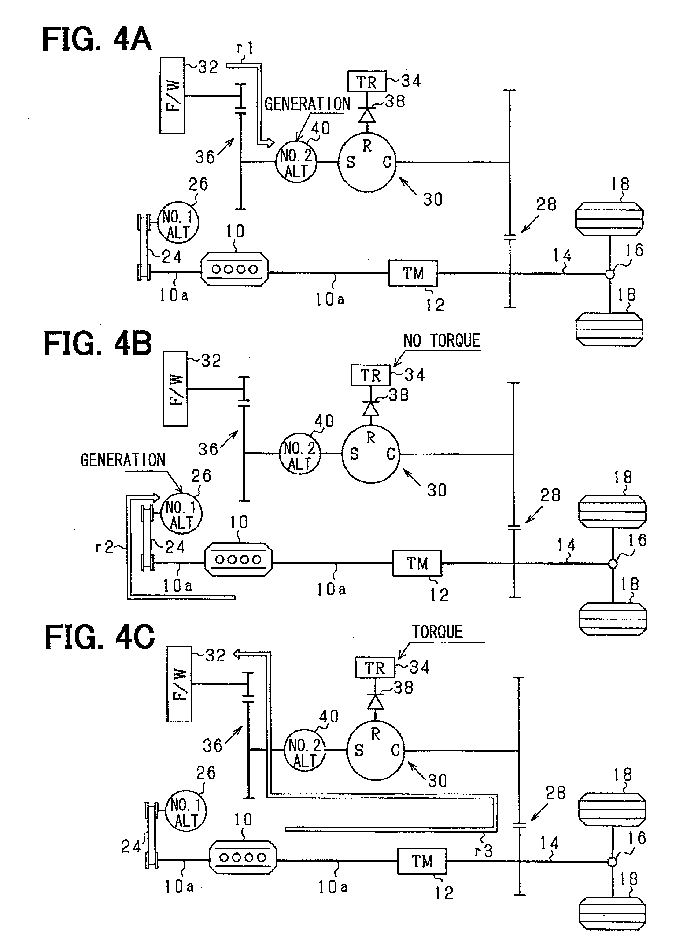

If it is determined at step S12 that the flywheel rotation speed Nfw is higher than the regulation speed Na, step S14 is executed to instruct forced power generation by the second alternator 40 by using the rotation energy stored in the flywheel 32. This processing functions as forcing means for forcibly generating electric power without consuming fuel in the engine 10. Specifically, as shown in FIG. 4A, the rotation energy of the flywheel 32 is supplied through the flywheel 32 and the speed increase gear 36 (power transfer path r1) so that the second alternator 40 generates electric power. Here, the torque applied to the ring gear R by the torque regulator device 34 is made to 0 thereby to shut off power transfer between the drive wheels 18 and the flywheel 32.

The rotation energy of the flywheel 32, which is lost per unit time by frictional resistance and the like, tends to increase as the flywheel rotation speed Nfw increases. To use this loss effectively as much as possible, the power generation of the second alternator 40 may be set to increase as the flywheel rotation speed Nfw increases.

If the check result at step S12 is YES (Nfw is lower than Na), step S16 is executed as limiting means to prohibit use of the rotation energy of the flywheel 32. Specifically, the second alternator 40 is prohibited from generating power using the flywheel rotation energy.

At next step S18, it is checked whether the required power Weg to the engine 10 is equal to or less than a regulation power Wa. If it is determined at step S18 that the required power Weg of the engine 10 is equal to or less than the regulation power Wa, the engine 10 is determined to be operating with low load and step S20 is executed as speed maintaining means. At step S20, the required power Weg of the engine 10 is increased so that the increased power generated by the engine 10 is transferred to the flywheel 32 through the power transfer mechanism 30. Thus the flywheel rotation speed Nfw is maintained to be higher than the regulation speed Na. This processing is for maintaining the flywheel rotation speed Nfw to be higher than the regulation speed Na by reducing a ratio of fuel consumption corresponding to mechanical loss or cooling loss of the engine 10 relative to a total fuel consumption of the engine 10 and supplying the power generated by the engine 10 to the flywheel 32.

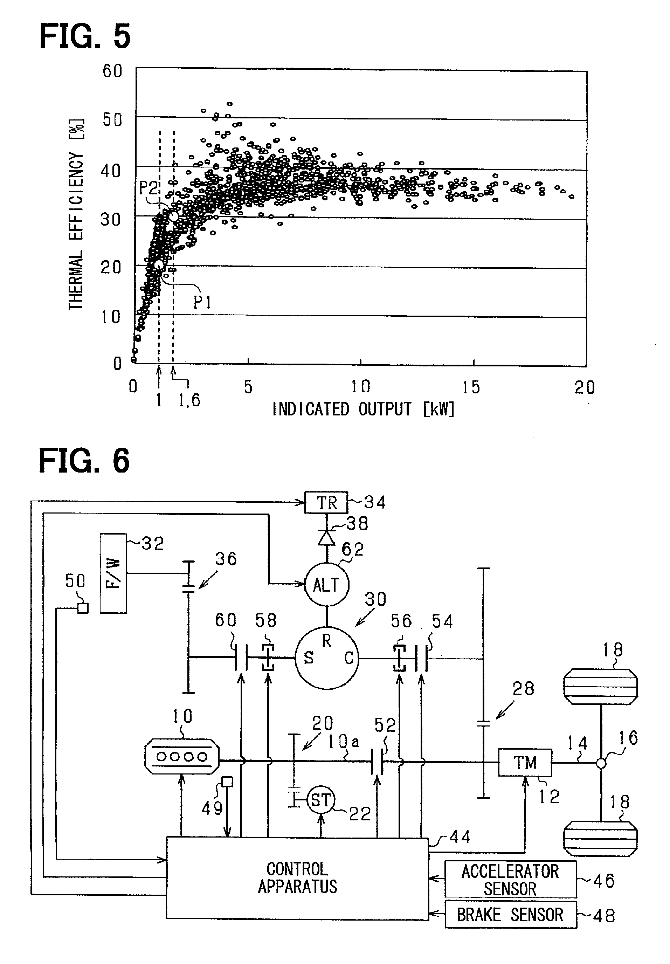

As shown in FIG. 5, the thermal efficiency of the engine 10 normally tends to decrease in a region of low required power Weg of the engine 10. For this reason, the combustion energy of fuel required for generating the same output of the engine 10 tends to increase. Therefore, the required power Weg of the engine 10 is increased and the generated power of the engine 10 is supplied to the flywheel 32 in case that the required power Weg of the engine 10 is low. Thus the fuel corresponding to the mechanical loss or the cooling loss of the engine 10 is used to store as the rotation energy of the flywheel 32.

More specifically, for example, the indicated output of the engine 10 is increased from 1kW (indicated by P1 in FIG. 5) to 1.6kW (indicated by P2 in FIG. 5). Here, the indicated output is calculated based on a cylinder pressure and volume of the engine 10 without taking mechanical loss and the like into consideration. This increase amount, that is, 0.6kW, is used for storing the rotation energy in the flywheel 32. Since the thermal efficiencies corresponding to the indicated outputs of 1kW and 1.6kW are about 20% and 30%, respectively, the losses caused to provide such outputs are 4kW and 3.7kW, respectively. It is thus possible to store the rotation energy in the flywheel 32 while reducing the loss.

Even in a case that the required power Weg of the engine 10 is increased by this step S20, the increase amount in the required power Weg is relatively small in comparison to the power used for vehicle travel (power running). The increase in the required power Weg of the engine 10 caused by this step will affect drivability only slightly.

In the control processing in FIG. 3, if the check result at step S18 is NO or step S20 is finished, step S22 is executed as efficiency calculating means. At step S22, a first power generation efficiency ef1 and a second power generation efficiency ef2 are calculated. The first power generation efficiency ef1 is a ratio of power energy generated by the first alternator 26 relative to the energy supplied to the engine 10 for power generation by the first alternator 26 (energy generated by combustion of fuel). The second power generation efficiency ef2 is a ratio of power energy generated by the second alternator 40 relative to the energy applied to the engine 10 for power generation by the second alternator 40 (energy generated by combustion of fuel).

The first power generation efficiency ef1 is calculated based on, for example, power (required power) required to in-vehicle devices including the control apparatus 44 and various actuators for controlling fuel combustion in the engine 10, the rotation speed Ng1 of the first alternator 26 corresponding to the output value of the crankshaft sensor 49 and the operation condition of the engine 10. The second power generation efficiency ef2 is calculated based on, for example, the required power, the rotation speed Ng2 (Nfw) of the second alternator 40 corresponding to the output value of the rotation speed sensor 50. Here, the rotation speeds Ng1 and Ng2 of the alternators 26 and 40 are used to calculate the first and the second power generation efficiencies ef1 and 3f2, because it is possible to determine a ratio of the power generated by the alternator relative to the power supplied to the alternator based on the rotation speed.

At step S24, one of the first and the second alternators 26 and 40, which has a larger value between the calculated first power generation efficiency ef1 and the calculated second power generation efficiency ef2, is instructed to generate power. Step S24 operates as power generation processing means.

Specifically, when it is determined that the first power generation efficiency ef1 is larger, the first alternator 26 is operated to generate power by supplying power of the engine 10 through the crankshaft 10a and the belt 24 (power transfer path r2) as shown in FIG. 4B. If it is determined that no instruction is made at step S20 to supply the engine power to the flywheel 32, the torque applied to the ring gear R by the power transfer mechanism 30 3 is set to 0. Thus the power transfer between the drive wheels 18 and the flywheel 32 is shut off. That is, as expressed by the equations (c1) and (c2), the power is not transferred between these rotor bodies when no torque is applied to any one of the rotor bodies of the power transfer mechanism 30. If it is determined that an instruction for supplying the engine power to the flywheel 32 is issued at step S20, the torque is applied to the ring gear R by the torque regulator device 34. Thus the power transfer between the drive wheels 18 and the flywheel 32 is effected.

If it is determined that the second power generation efficiency ef2 is larger, the second alternator 40 is operated to generate power by supplying the power of the engine 10 through the crankshaft 10a, the transmission device 12, the speed reduction gear 28 and the power transfer mechanism 30 (power transfer path r3) as shown in FIG. 4C. Here, the torque is supplied to the ring gear R by the torque regulator device 34. Thus the power of the engine 10 is transferred to the second alternator 40 through the power transfer mechanism 30. If it is determined that the instruction for supplying the engine power to the flywheel 32 is issued at step S20, the torque to be supplied to the ring gear R may be regulated by the torque regulator device 34 so that the power of the engine 10 may be transferred to the flywheel 32 as well as to the second alternator 40. If it is determined that the instruction for supplying the engine power to the flywheel 32 is not issued at step S20, it should be avoided that the rotation energy of the flywheel 32 is consumed by the power generation of the second alternator 40. Therefore, the torque applied to the ring gear R may be regulated properly by the torque regulator device 34 so that all power, which the second alternator 40 needs to generate the required power, may be supplied to the second alternator 40 from the sun gear S side.

In case that the check result at step S10 is YES (and regenerative processing S11 is finished) or the processing at step S14 or S24 is finished, the above-described series of processing is finished once.

The first embodiment provides the following advantages.

> (1) The first and the second power generation efficiencies ef1 and ef2 are calculated and the instruction of power generation is issued to one of the alternators, which has a larger power generation efficiency between the calculated power generation efficiencies ef1 and ef2. Thus fuel consumption of the engine 10 required for a unit power generation energy can be reduced as much as possible.

(2) If it is determined that the flywheel rotation speed Nfw is equal to or lower than the regulation speed Na, the power generation by the second alternator 40 is effected using the rotation energy of the flywheel 32 as a power supply source. Thus it is possible to prevent the flywheel rotation speed Nfw from falling excessively and thereby to maintain the flywheel rotation speed Nfw at high levels at the time of starting the regenerative control processing. As a result the energy supplied to the flywheel 32 side out of the kinetic energy of the vehicle by the regenerative control processing can be increased.

(3) If it is determined that the flywheel rotation speed Nfw is higher than the regulation speed Na, the second alternator 40 is forced to generate power by using the rotation energy of the flywheel 32. Thus, the second alternator 40 can be operated to generate power without increasing the fuel amount used in the engine 10.

(Second Embodiment)

According to a second embodiment, a vehicle control system is configured as shown in FIG. 6, in which the same or similar parts as in the first embodiment are designated by the same or similar reference numerals as those in FIG. 1 for brevity.

In the vehicle control system, the crankshaft 10a is coupled mechanically to the transmission device 12 through a clutch 52. The clutch 52 is provided as electronically-controlled power transfer/interruption means, which switches over transfer and shut-off of power between the engine 10 and the transmission device 12 by switching over an engaging state and a disengaging state between the engine 10 and the transmission device 12.

Between the clutch 52 and the transmission device 12, the power transfer mechanism 30 is coupled mechanically through the speed reduction gear 28, a clutch 54 and a lock mechanism 56. The clutch 54 is also electronically-controlled power transfer/interruption means, which switches over transfer and shut-off of power between the carrier C and the engine 10 or the drive wheels 18 by switching over an engaging state and a disengaging state of the power transfer mechanism 30 (carrier C) to the engine 10 or the drive wheels 18. The lock mechanism 56 is control means, which prohibits rotation of the carrier C of the power transfer mechanism 30.

The flywheel 32 is coupled mechanically to the sun gear S of the power transfer mechanism 30 through a lock mechanism 58, a clutch 60 and the speed increase gear 36. The lock mechanism 58 is brake means, which prohibits the rotation of the sun gear S of the power transfer mechanism 30. The clutch 60 is electronically-controlled power transfer/interruption means, which switches over transfer and shut-off of power between the flywheel 32 and the sun gear S by switching over an engaging state and a disengaging state between the flywheel 32 and the power transfer mechanism 30 (sun gear S).

Between the ring gear R and a one-way clutch 42, an alternator (generator) 62 is coupled mechanically. The alternator 62 has the same functions as the first alternator 26 or the second alternator 40 of the first embodiment.

A sum of the torques of the torque regulator device 34 and the alternator 62 is applied to the ring gear R. If the torque applied to the ring gear R is deficient under a condition that the torque of the alternator 62 decreases due to the fully-charged state of the in-vehicle battery for example, this deficiency may be supplemented by the torque regulator device 34.

The power transfer mechanism 30 is connected between the clutch 52 and the transmission device 12 to avoid loss of energy caused by the transmission device 12 provided in the power transfer path when the power is transferred from the engine 10 to the power transfer mechanism 30.

The clutch 52 is driven to the disengaging state when the regenerative control processing is executed by the control apparatus 44.

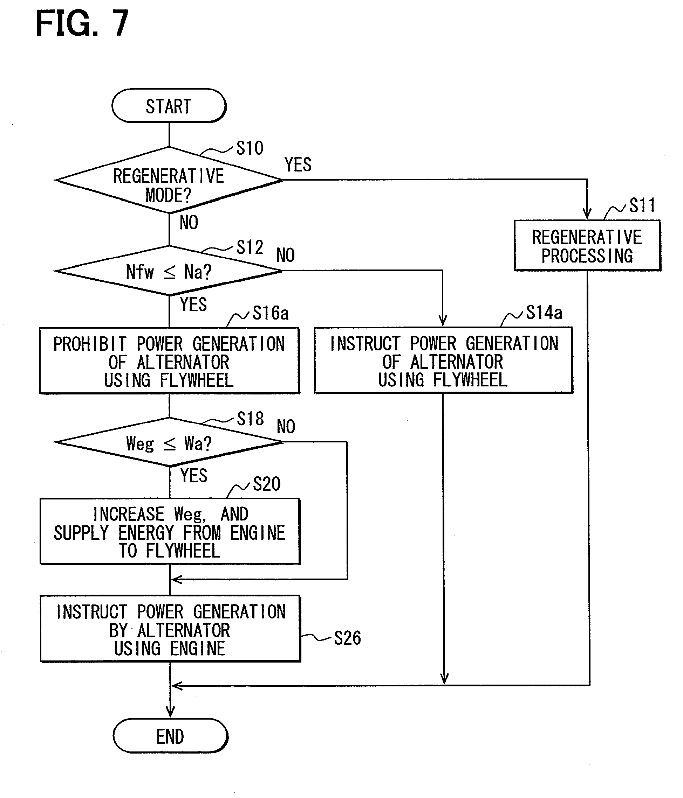

The control apparatus 44 executes the vehicle control processing including the flywheel rotation speed maintaining processing according as shown in FIG. 7. This processing is repeated at a predetermined interval for example. The same or similar steps as in FIG. 3 are indicated by the same or similar step numbers for brevity.

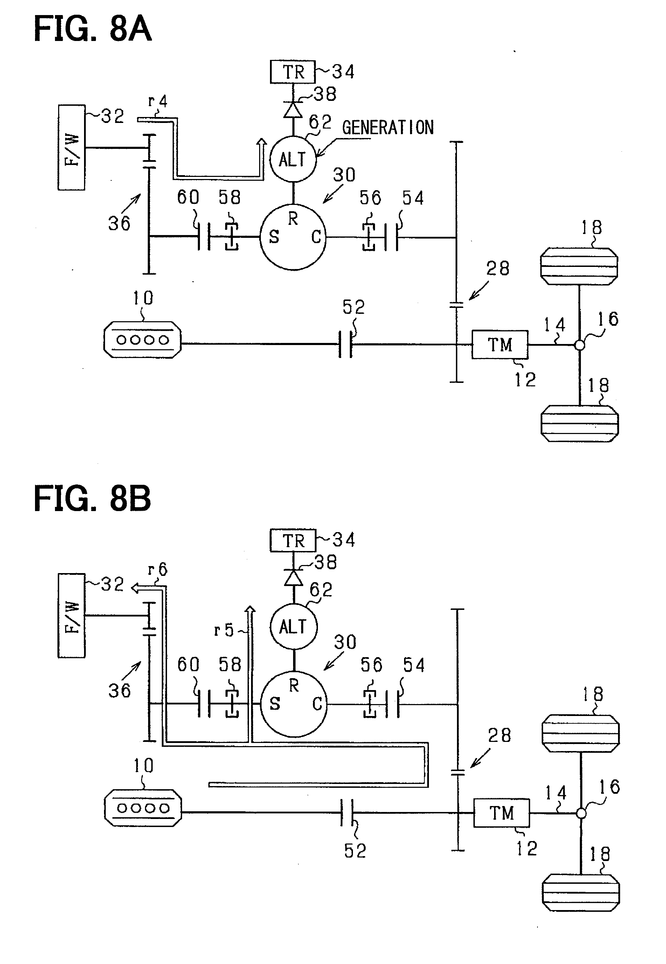

In this series of processing, if the check result at S10 is NO, step S12 is executed. If the check result at step S12 is NO (Nfw>Na), step S14a is executed to force the alternator 62 to generate power by using the rotation energy stored in the flywheel 32. Specifically, as shown in FIG. 8A, the rotation energy of the flywheel 32 is supplied to the alternator 62 through the speed increase gear 36, the clutch 60, the lock mechanism 58 and the power transfer mechanism 30 (power transfer path r4) thereby to cause the alternator 62 to generate power. Here, the clutch 54 is driven to the disengaging state, the rotation of the carrier C is prohibited by the lock mechanism 56 and the clutch 60 is driven to the engaging state, so that the alternator 62 generates power.

If the check result at step S12 is YES, step S16a is executed to prohibit the power generation of the alternator 62 using the rotation energy of the flywheel 32.

If the check result at step S18 is NO or the execution of step S20 is finished, step S26 is executed to instruct the alternator 62 by using the engine 10. Specifically, as shown in FIG. 8B, the alternator 62 is driven to generate power by supplying the power of the engine 10 through the engine 10, the clutch 52, the speed reduction gear 28, the clutch 54, the lock mechanism 56 and the power transfer mechanism 30 (power transfer path r5).

In this case, the clutches 52 and 54 are driven to the engaging state.

If it is determined that the instruction for supplying the engine power to the flywheel 32 is issued at step S20, the power is supplied from the engine 10 to the flywheel 32 through the engine 10, the clutch 52, the speed reduction gear 28, the clutch 54, the lock mechanism 56, the power transfer mechanism 30, the lock mechanism 58, the clutch 60 ad the speed increase gear 36 (power transfer path r6). In this case, the clutch 60 is also driven to the engaging state in addition to the clutches 52 and 54, and the torque is applied to the ring gear R by power generation of the alternator 62. When the engine power is transferred to the flywheel 32, the loss of energy discharged as thermal energy from a brake of the torque regulator device 34 out of the energy generated by the engine 10 can be reduced in comparison to a case, in which the application of torque to the ring gear R is borne solely by the torque regulator device 34.

When the check result at step S10 is YES or the execution of step S14 or S26 is finished, the above-described series of processing is finished once.

According to the second embodiment, the flywheel rotation speed maintaining processing can thus be executed properly. If it is determined that the instruction for supplying the engine power to the flywheel 32 is issued, the alternator 62 out of the torque regulator device 34 and the alternator 62 is driven (for power generation) to apply the torque to the ring gear R for transferring the engine power to the flywheel 32. Thus it is possible to reduce the loss of energy, which is a part of the energy generated by the engine 10 and discharged as the thermal energy from the brake of the torque regulator device 34.

(Other Embodiments)

The above-described embodiments may be modified and implemented as follows.

(a) Checking whether the instruction for power generation of the engine 10 is not limited to the method exemplified in the first embodiment. For example, when it is determined that braking is required by a user, it is possible to determine that the instruction for generating power by the engine 10 is not issued.

(b) In the first embodiment, it is possible to adopt a control logic for generating power by only the first alternator 26 when it is determined that the flywheel rotation speed Nfw is equal to or lower than the regulation speed Na.

(c) The rotation energy stored in the flywheel 32 may be supplied to the in-vehicle devices by other methods other than those exemplified in the above-described embodiments. For example, the rotation energy of the flywheel 32 may be used for power running of the vehicle when the vehicle need be accelerated. In addition, in the first embodiment, the rotation energy of the flywheel 32 may be applied to initially rotate the crankshaft 10a without using the starter 22 when the vehicle is at rest, on condition that a clutch device is provided for transferring or shutting off the power between the speed reduction gear 28 and the drive wheels 18 and the power between the speed reduction gear 28 and the drive wheels 18 is shut off by the clutch device.

(d) In the first embodiment, if it is determined that the flywheel rotation speed Nfw is equal to or lower than the regulation speed Na, use of the rotation energy of the flywheel 32 is prohibited. Instead, it is also possible to reduce the amount of use of the rotation energy of the flywheel 32 for example. Specifically, when the second alternator 40 is instructed to generate power, the power generation of this alternator may be reduced. In case that the power required by the in-vehicle devices becomes deficient because of reduction of power generation of the second alternator 40, the deficiency of power for the in-vehicle devices may be supplemented by causing the first alternator 26 to generate power by using the power of the engine 10.

(e) In the second embodiment, the torque regulator device 34 need not be coupled to the ring gear R.

(f) In the second embodiment, the speed reduction gear 28 may be coupled to the drive shaft 14.

(g) The first and the second power generation efficiencies ef1 and ef2 may be calculated by other methods different from that of the first embodiment. For example, the first power generation efficiency ef1 may be calculated as a ratio of the power generated by the first alternator 26 relative to the power supplied from the engine 10 to the first alternator 26. The second power generation efficiency ef2 may be calculated as a ratio of the power generated by the second alternator 40 relative to the power supplied from the engine 10 to the second alternator 26

(g) In each of the above-described embodiments, step S20 in FIG. 3 and FIG. 7 may be eliminated. That is, in this case, the engine power is forcibly supplied to the flywheel 32 when it is determined that the flywheel rotation speed Nfw is equal to or lower than the regulation speed Na.

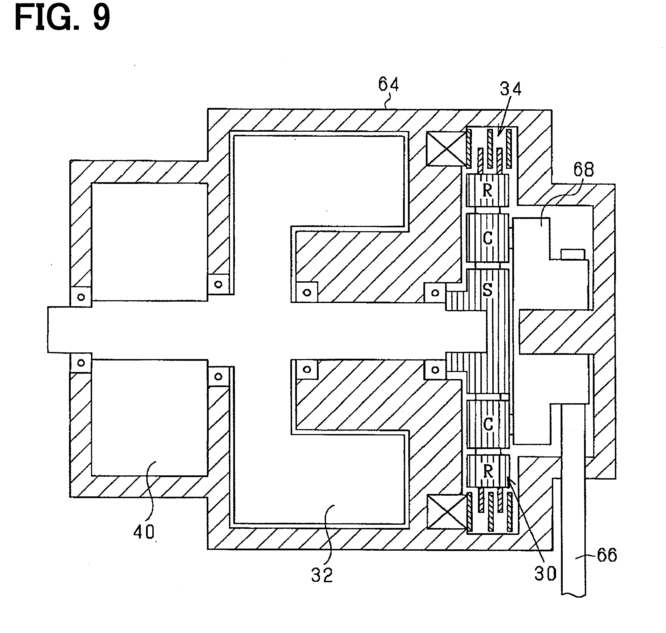

(h) In the first embodiment, the speed increase gear 36 may be eliminated. In this case, as shown in FIG. 9, the flywheel 32, the power transfer mechanism 30, the torque regulator device 34, the second alternator 40 and the like may be accommodated in a housing 64 and integrated as a single unit. In this case, the drive shaft 14 and the carrier C may be coupled by way of a chain 66 and a sprocket 68.

A vehicle control apparatus (44) is provided to properly control power transfer in a vehicle. In a case of a regenerative mode, regenerative control processing is executed to store the kinetic energy of the vehicle in a flywheel (32) as rotation energy. In case of a non-regenerative mode, when a rotation speed (Nfw) of the flywheel (32) is lower than a regulation speed (Na), a second alternator (40) is prohibited from generating power using the rotation energy stored in the flywheel (32).

## Claims

1. A vehicle control apparatus for a vehicle having an internal combustion engine (10) and a power transfer mechanism (30) for transferring power among a flywheel (32) storing rotation energy, drive wheels (18) and a torque regulator device (34) for regulating torque applied thereto,
   the power transfer mechanism (30) including a first rotor body (S), a second rotor body (C) and a third rotor body (R) coupled mechanically to the flywheel, the drive wheels and the torque regulator device, respectively, and causing rotation speeds of the first rotor body, the second rotor body and the third rotor body to be on a linear line in a collinearity characteristic diagram,
   the vehicle control apparatus comprising:

   regenerative processing means (44, S11) for storing kinetic energy of the vehicle in the flywheel as rotation energy under a condition that the internal combustion engine is not instructed to generate power; and
   limiting means (44, S16, S16a) for limiting supply of the rotation energy stored in the flywheel to an in-vehicle device in case that a rotation speed (Nfw) of the flywheel is determined to be equal to or lower than a regulation speed (Na) in a condition other than a condition of regenerative processing by the regenerative processing means.

2. The vehicle control apparatus according to claim 1, further comprising:

   rotation speed maintaining means (44, S20) for increasing required power to the engine and supplying the power generated by the engine to the flywheel through the power transfer mechanism thereby to maintain the rotation speed of the flywheel to be higher than the regulation speed, when the required power to the engine is determined to be low in the condition other than the condition of the regenerative processing,
   wherein the second rotor body (C) is coupled to the internal combustion engine.

3. The vehicle control apparatus according to claim 1 or 2, wherein:

   the second rotor body (2) is coupled to the internal combustion engine;
   a first generator (26) is provided for generating power by receiving the power from the internal combustion engine without through the power transfer mechanism; and
a second generator (26) is disposed between the first rotor body and the flywheel.

4. The vehicle control apparatus according to claim 3, further comprising:

power generation efficiency calculation means (44, S22) for calculating a first power generation efficiency (ef1) and a second power generation efficiency (ef2), the first power generation efficiency being a ratio of power energy generated by the first generator relative to energy generated by the internal combustion engine for power generation by the first generator, and the second power generation efficiency being a ratio of power energy generated by the second generator relative to energy generated by the internal combustion engine for power generation by the second generator; and
power generation processing means (44, S24) for executing power generation processing of one of the generators, which has a larger power generation efficiency between the first power generation efficiency and the second power generation efficiency.

5. The vehicle control apparatus according to claim 3 or 4, further comprising:

forcing means (44, S14) for forcing the second generator to generate power by using the rotation energy of the flywheel, when the rotation speed of the flywheel is determined to be higher than the regulation speed.

6. The vehicle control apparatus according to claim 1 or 2, wherein:

the second rotor body (C) is coupled to the internal combustion engine; and
the third rotor body (R) is coupled to a generator (62).

7. The vehicle control apparatus according to claim 6, wherein:

power transfer/interruption means (54) is provided in the vehicle to switch over transfer and interruption of power between the drive wheels and the second rotor body; and
brake means (58) is provided in the vehicle to apply torque, which restricts rotation of the second rotor body.

8. The vehicle control apparatus according to claim 6 or 7, wherein:

power transfer/interruption means (60) is provided in the vehicle to switch over transfer and interruption of power between the flywheel and the first rotor body; and
brake means (58) is provided in the vehicle to apply torque, which restricts rotation of the first rotor body.

9. The vehicle control apparatus according to any one of claims 6 to 8, further comprising:

forcing means (44, S14a) for forcing the generator to generate power by using the rotation energy of the flywheel, when the rotation speed of the flywheel is determined to be higher than the regulation speed.

10. The vehicle control apparatus according to any one of claims 1 to 9, wherein:

the limiting means (44, S16, S16a) prohibits supply of the rotation energy stored in the flywheel to the in-vehicle device thereby to limit the supply of rotation energy.

# FIG. 1

# FIG. 2

# FIG. 3

```
              ┌──────────────┐
              │    START     │
              └──────┬───────┘
                     │  ⌐S10
                ╱────┴────╲          YES
              ╱ REGENERATIVE ╲──────────────────────┐
              ╲    MODE?    ╱                        │
                ╲────┬────╱                          ▼  ⌐S11
                   NO │                        ┌──────────────┐
                     │  ⌐S12  NO               │ REGENERATIVE │
                ╱────┴────╲────────────┐       │  PROCESSING  │
              ╱  Nfw ≤ Na?  ╲          │       └──────┬───────┘
                ╲────┬────╱            │              │
                  YES │  ⌐S16          ▼  ⌐S14        │
         ┌───────────┴──────────┐  ┌──────────────────────┐
         │  PROHIBIT POWER      │  │  INSTRUCT POWER      │
         │  GENERATION OF       │  │  GENERATION OF       │
         │  SECOND ALTERNATOR   │  │  SECOND ALTERNATOR   │
         │  USING FLYWHEEL      │  │  USING FLYWHEEL      │
         └───────────┬──────────┘  └──────────┬───────────┘
                     │  ⌐S18  NO              │
                ╱────┴────╲──────┐            │
              ╱  Weg ≤ Wa?  ╲    │            │
                ╲────┬────╱      │            │
                  YES │  ⌐S20    │            │
         ┌───────────┴──────────┐│            │
         │  INCREASE Weg, AND   ││            │
         │  SUPPLY ENERGY FROM  ││            │
         │  ENGINE TO FLYWHEEL  ││            │
         └───────────┬──────────┘│            │
                     │◄──────────┘            │
         ┌───────────┴──────────┐             │
         │  CALCULATE ef1 AND   │             │
         │  ef2 BASED ON        │ ⌐S22        │
         │  REQUIRED POWER,     │             │
         │  Ng1 AND Nfw         │             │
         └───────────┬──────────┘             │
         ┌───────────┴──────────┐             │
         │  INSTRUCT POWER      │             │
         │  GENERATION BY FIRST │             │
         │  ALTERNATOR OR       │ ⌐S24        │
         │  SECOND ALTERNATOR   │             │
         │  BASED ON ef1 AND ef2│             │
         └───────────┬──────────┘             │
                     │◄──────────────────────┘
              ┌──────┴───────┐
              │     END      │
              └──────────────┘
```

## FIG. 4A

## FIG. 4B

## FIG. 4C

# FIG. 5

# FIG. 6

# FIG. 7

```
                    ┌─────────────┐
                    │    START    │
                    └──────┬──────┘
                           │        ╱S10
                      ◇────┴────◇         YES
                     ╱ REGENERATIVE ╲──────────────────────────────┐
                     ╲    MODE?     ╱                               │
                      ◇────┬────◇                                   │
                           │ NO                           ╱S11     │
                           │                      ┌────────┴────────┐
                           │        ╱S12 NO       │  REGENERATIVE   │
                      ◇────┴────◇──────────┐      │   PROCESSING    │
                     ╱  Nfw ≤ Na?  ╲       │      └────────┬────────┘
                      ◇────┬────◇          │               │
                           │ YES           │               │
                           │    ╱S16a      │    ╱S14a       │
              ┌────────────┴────────────┐  │┌──────────────┴──┐     │
              │ PROHIBIT POWER GENERATION│ ││INSTRUCT POWER   │     │
              │     OF ALTERNATOR        │ ││GENERATION       │     │
              │     USING FLYWHEEL       │ ││OF ALTERNATOR    │     │
              └────────────┬────────────┘  ││USING FLYWHEEL   │     │
                           │    ╱S18 NO     │└──────────┬──────┘     │
                      ◇────┴────◇───────┐   │           │            │
                     ╱  Weg ≤ Wa?  ╲    │   │           │            │
                      ◇────┬────◇       │   │           │            │
                           │ YES ╱S20   │   │           │            │
              ┌────────────┴──────────┐ │   │           │            │
              │  INCREASE Weg, AND     │ │   │           │            │
              │ SUPPLY ENERGY FROM     │ │   │           │            │
              │ ENGINE TO FLYWHEEL     │ │   │           │            │
              └────────────┬──────────┘ │   │           │            │
                           │◄───────────┘   │           │            │
              ┌────────────┴──────────┐     │           │            │
              │ INSTRUCT POWER         │     │           │            │
              │ GENERATION BY ALTERNATOR│    │           │            │
              │ USING ENGINE           │─S26 │           │            │
              └────────────┬──────────┘      │           │            │
                           │◄────────────────────────────┘            │
                           │◄─────────────────────────────────────────┘
                    ┌──────┴──────┐
                    │    END      │
                    └─────────────┘
```

# FIG. 8A

# FIG. 8B

# FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009010819 A